# EUROPEAN PATENT APPLICATION

(11) **EP 4 195 134 A1**
(43) Date of publication of application: **14.06.2023**
(21) Application number: 22198913.0
(22) Date of filing: 30.09.2022
(51) Int. Cl.: G06Q 30/0201, G01C 21/34, G06Q 50/30, G08G 1/01

(54) **TRANSPORTATION GUIDING DEVICE, TRANSPORTATION GUIDING METHOD, AND TRANSPORTATION GUIDING PROGRAM**

(30) Priority: 07.12.2021 JP 2021198397
(71) Applicant: Hitachi, Ltd., Tokyo 100-8280 (JP)
(72) Inventor: MOCHIZUKI, Tomoyuki, Tokyo, 100-8280 (JP); HIROI, Kazushige, Tokyo, 100-8280 (JP)
(74) Representative: MERH-IP Matias Erny Reichl Hoffmann Patentanwälte PartG mbB

(57) **Abstract**

A transportation guiding device (1) includes a user guiding part (22) configured to: identify a service of a mode of transportation currently having a small number of users; and display, to a user, the identified service of the mode of transportation and a commercial facility to which the service of the mode of transportation takes, such that the number of users of the service of the mode of transportation is increased within a prescribed range.

## Description

### BACKGROUND OF THE INVENTION

### TECHNICAL FIELD

The present invention relates to a transportation guiding device, a transportation guiding method, and a transportation guiding program.

### BACKGROUND ART

In urban areas, various modes of transportation such as a route bus, a taxi, a railroad are developed. A consumer may use any of the modes of transportation to visit a commercial facility and purchase goods or services provided by the commercial facility. When such commercial activities are increased, the consumer, the commercial facility, and the transportation gain respective benefits. A technology that a computer suggests a consumer to visit a commercial facility using a transportation has been common in recent years.

Patent Document 1 discloses that a service information distribution device determines timing to distribute service information provided by a commercial facility to a mobile terminal of a consumer or a terminal mounted in a vehicle which the consumer is taking. The service information includes, for example, information on a coupon and a limited-time offer. The service information distribution device transmits the service information when, for example: there are a number of vehicles out of service; a vehicle is underoccupied; a vehicle is approaching a commercial facility; the number of customers who have visited a commercial facility is small; and, a consumer has nothing in particular planned for the present.

### RELATED ART DOCUMENT

### PATENT DOCUMENT

[Patent Document 1] Japanese Patent No. 6493969, Specification

### SUMMARY OF THE INVENTION

### PROBLEM TO BE SOLVED BY THE INVENTION

A consumer may have a higher level of satisfaction when, for example: a route bus the consumer happens to get on is not crowded; and he/she can go to a commercial facility, keeping seated all the way. The service information distribution device of Patent Document 1 has, however, problem that, because service information is delivered to a large number of unspecified consumers, a vehicle of interest may become too much crowded in some cases. In other cases, the number of attracted passengers may be smaller than expected.

In light of the above, the present invention is made in an attempt to guide a consumer to a commercial facility such that the number of consumers who take a vehicle to visit the commercial facility is increased within a range of a riding capacity of the vehicle.

### MEANS FOR SOLVING THE PROBLEM

A transportation guiding device of the present invention includes a user guiding part configured to: identify a service of a mode of transportation currently having a small number of users; and display, to a user, the identified service of the mode of transportation and a commercial facility to which the service of the mode of transportation takes, such that the number of users of the service of the mode of transportation is increased within a prescribed range.

Other means will be described in an embodiment for carrying out the present invention.

### ADVANTAGEOUS EFFECT OF THE INVENTION

The present invention makes it possible to guide a consumer to a commercial facility such that the number of consumers who take a vehicle to visit the commercial facility is increased within a range of a riding capacity of the vehicle.

### BRIEF DESCRIPTION OF THE DRAWINGS

FIG. 1 is a diagram for explaining a configuration of a transportation guiding device according to an embodiment of the present invention.
FIG. 2 is a diagram for explaining a relationship between a mode of transportation and a commercial facility according to the embodiment.
FIG. 3 is a diagram illustrating an example of a case where an invitation is made to a user according to the embodiment.
FIG. 4 is a diagram illustrating an example of visitor information according to the embodiment.
FIG. 5 is a diagram illustrating an example of passenger information according to the embodiment.
FIG. 6 is a diagram illustrating an example of vehicle information according to the embodiment.
FIG. 7 is a diagram illustrating an example of user information according to the embodiment.
FIG. 8 is a diagram illustrating an example of invitation and response information according to the embodiment.
FIG. 9 is a diagram illustrating an example of alternative transportation information according to the embodiment.
FIG. 10 is a flowchart illustrating a procedure of a processing of guiding a user according to the embodiment.
FIG. 11 is a diagram illustrating an example of screen for invitation according to the embodiment.
FIG. 12 is a flowchart illustrating a procedure of a processing of arranging an alternative transportation according to the embodiment.
FIG. 13 is a diagram illustrating an example of a screen for transportation change according to the embodiment.

### EMBODIMENTS FOR CARRYING OUT THE INVENTION

An embodiment for carrying out the present invention (to be simply referred to as an "embodiment") is described below in detail with reference to the related drawings. The embodiment describes an example in which, in an urban area where there are a large number of houses and commercial facilities with much transportation such as networks of railroads, buses, and roadways, a possible consumer purchasing goods or services provided by a commercial facility is notified of information on the commercial facility and a mode of transportation to visit the commercial facility.

### (Terminology)

A commercial facility is a physical real commercial facility that provides goods or services.

A consumer is a customer or a candidate thereof of a commercial facility.

A mode of transportation is a vehicle that runs on a road or a railway with a large number of unspecified consumers on board. Some typical examples of the mode of transportation include a railroad, a route bus, a taxi, an automobile of a ride-sharing service, and a vehicle of a commercial facility that exclusively drives a customer thereof. The mode of transportation may or may not travel in accordance with a prescribed transportation service schedule.

A consumer is both a passenger of a mode of transportation and a "user" who can use a service provided by a transportation guiding device according to the embodiment. The term "user" used hereinafter includes a "consumer" and a "passenger".

An alternative transportation is another mode of transportation that can be replaced by a mode of transportation of interest and performs an alternative transport.

A route is a path on which a plurality of modes of transportation travel in accordance with a single transportation service schedule.

A service is a given mode of transportation that runs from a point of origin to a final destination at specified time every day. The service is originally a concept on a transportation service schedule 43. The service has a service ID to be described hereinafter. For example, a service ID "B01" is given to a service of a route bus which runs from a depot BS01 as a point of origin to a depot BS04 as a final destination at specified time on a day. The physically same route bus may run from the depot BS01 to the depot BS04 at another specified time on the same day, which is referred to as a service with a service ID "B02", for example. In the meantime, when a route bus physically different from that with the service ID "B01" runs from the depot BS01, the point of origin, to the depot BS04, the final destination, at the same specified time on the other day, then the service has the same service ID "B01".

### (Configuration and other structure of transportation guiding device)

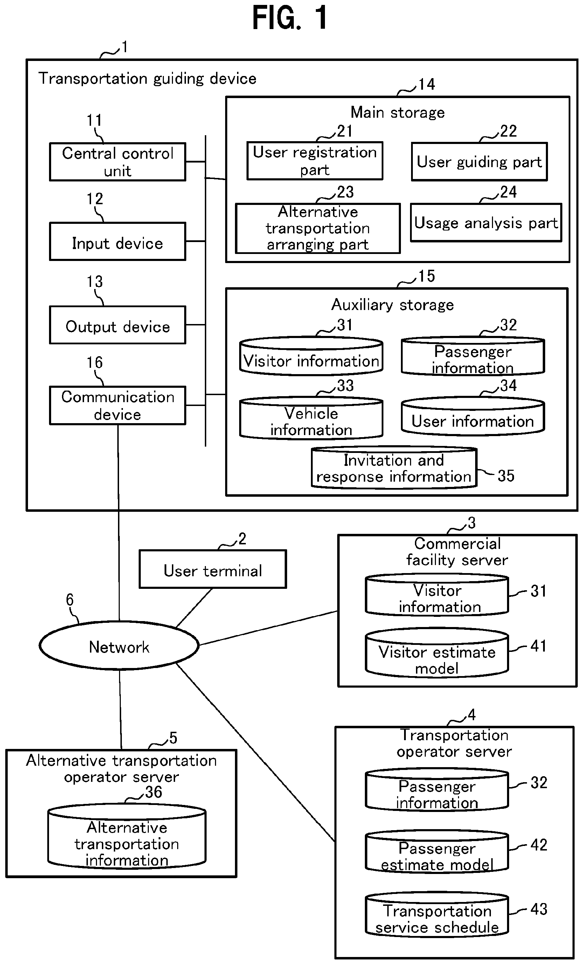

FIG. 1 is a diagram for explaining a configuration of a transportation guiding device 1. The transportation guiding device 1 is: a generally available computer; and includes a central control unit 11, an input device 12 such as a mouse and a keyboard, an output device 13 such as a display, a main storage 14, and an auxiliary storage 15, which are connected to each other via a bus. The auxiliary storage 15 stores therein visitor information 31, passenger information 32, vehicle information 33, user information 34, and invitation and response information 35 (details of which will be described hereinafter).

The main storage 14 includes a user registration part 21, a user guiding part 22, an alternative transportation arranging part 23. and a usage analysis part 24, each of which is a program. The central control unit 11 reads those programs from the auxiliary storage 15 and loads into the main storage 14, to thereby respective functions of the programs (details of which will be described hereinafter). The auxiliary storage 15 may be configured independently from the transportation guiding device 1 (a cloud computing).

The transportation guiding device 1 is connected to each of a user terminal 2, commercial facility server 3, a transportation operator server 4, and an alternative transportation operator server 5, via a network 6. The user terminal 2 is a mobile or a stationary terminal device operated by a user. The commercial facility server 3 is a server operated by an operator of a commercial facility. The transportation operator server 4 is a server operated by an operator of a transportation. It is assumed that the transportation used herein is a route bus. The alternative transportation operator server 5 is a server operated by an operator of an alternative transportation. It is assumed that the alternative transportation used herein is a corporate private minibus which is operated by a given commercial facility and is used only by a customer of the commercial facility.

The commercial facility server 3 stores therein the visitor information 31 and a visitor estimate model 41. The visitor estimate model 41 is a mathematical model which allows: an input of, for example, a future date (including a season and a day of the week), a period of time in a day, a weather condition, information on events such as a limited-time offer, and a commercial facility ID (to be described in detail hereinafter); and an output of, for example, the number of estimated visitors at the period of time. The user guiding part 22 or the commercial facility server 3 makes the visitor estimate model 41 learn by machine learning, utilizing time-series empirical values in the past as learning data. The visitor information 31 corresponds to an input condition and an output result of the machine-learned visitor estimate model 41. The visitor information 31 is transmitted to the transportation guiding device 1 and is stored in the auxiliary storage 15.

The transportation operator server 4 stores therein the passenger information 32, a passenger estimate model 42, and a transportation service schedule 43. The transportation service schedule 43 is a generally-used transportation service diagram of a route bus or a train. The passenger estimate model 42 is a mathematical model which allows: an input of, for example, the transportation service schedule 43 (including a service and a section of a service), a future date (including a season and a day of the week), a period of time, a weather condition, information on local event; and an output of, for example, the number of estimated passengers at the period of time. The user guiding part 22 or the transportation operator server 4 makes the passenger estimate model 42 learn by machine learning, utilizing time-series empirical values in the past as learning data. The passenger information 32 corresponds to an input condition and an output result of the machine-learned passenger estimate model 42. The passenger information 32 is transmitted to the transportation guiding device 1 and is stored in the auxiliary storage 15.

The alternative transportation operator server 5 stores therein alternative transportation information 36. The alternative transportation information 36 is a service schedule of an alternative transportation (to be described in detail hereinafter).

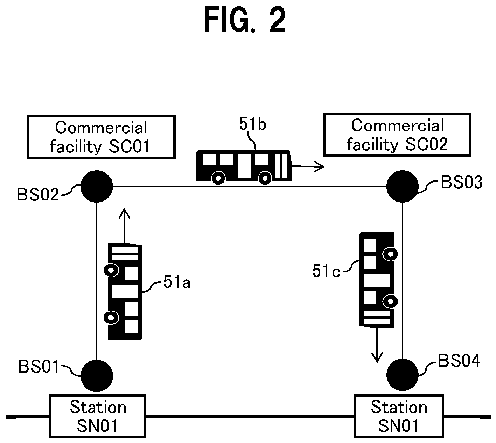

FIG. 2 is a diagram for explaining a relationship between a mode of transportation and a commercial facility. In an urban area, a railroad (shown by thick solid lines) has Stations SN01 and SN02. A bus system (shown by thin solid lines) has Bus stops BS01, BS02, BS03, and BS04. Bus stop BS01 is located near Station SN01. Bus stop BS04 is located near Station SN02. Bus stop BS02 is located near Commercial facility SC01. And, Bus stop BS03 is located near Commercial facility SC02.

It is assumed in the bus system that a route bus 51a is currently running between Bus stops BS01 and BS02 to Bus stop BS02. A route bus 51b is currently running between Bus stops BS02 and BS03 to Bus stop BS03. And, a route bus 51c is currently running between Bus stops BS03 and BS04 to Bus stop BS04. Each of the route buses may shuttle between two bus stops or may make a round trip between Bus stop BS04 and Bus stop BS01 (including out of service).

On the assumption of the described above, for example, a user leaves home, takes a train to Station SN01, transfers to a route bus at Bus stop BS01, and gets off the bus at Bus stop BS02 or Bus stop BS03. After doing some shopping at Commercial facility SC01 or SC02, the user takes a route bus at Bus stop BS02 or Bus stop BS03 to, for example, Station SN02, at which the user boards a train to go back to his/her home or the like.

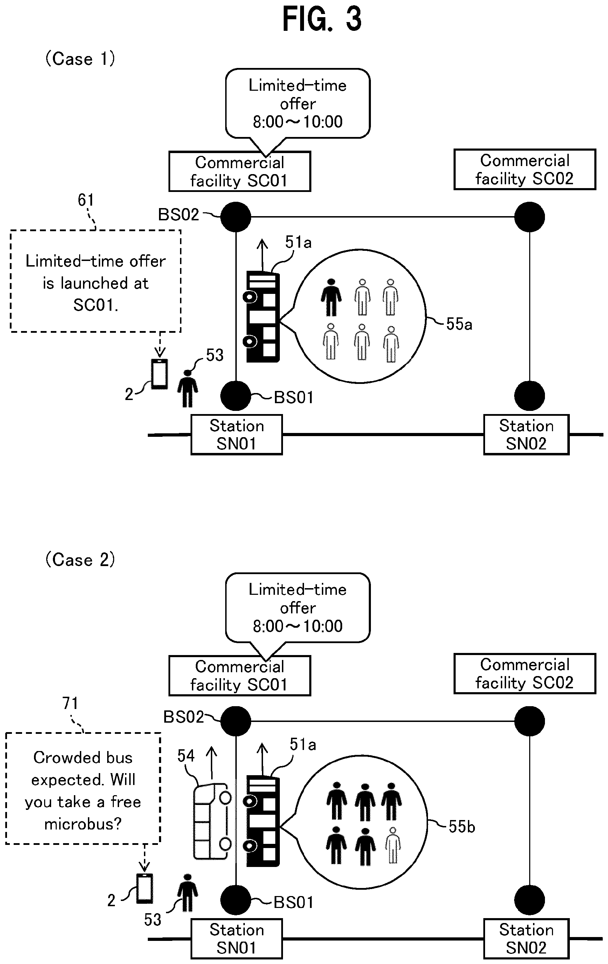

FIG. 3 is a diagram illustrating an example of a case where an invitation is made to a user. In FIG. 3, Case 1 and Case 2 each illustrate a case where Commercial facility SC01 illustrated in FIG. 2 holds a promotion event (a limited-time offer) during some period of time in the future. In each of Case 1 and Case 2, a user 53 is present near Station SN01 and Bus stop BS01. The user 53 is equipped with a user terminal 2.

Case 1 of FIG. 3 shows the following.

<1> The visitor estimate model 41 estimates that the number of visitors to Commercial facility SC01 during a period of time "8:00-10:00" on a given day is below a sufficient level.

<2> Commercial facility SC01 thus determines to have a limited-time offer during the period of time.

<3> Commercial facility SC01 wishes to bring a user 53 in the limited-time offer, who is present near Station SN01 and Bus stop BS01.

<4> Commercial facility SC01 thus wants the user 53 to get on the route bus 51a at Bus stop BS01 and then get off the route bus 51a at Bus stop BS02.

<5> The passenger estimate model 42 estimates that the route bus 51a has a sufficient number of unoccupied seats in the period of time of the limited-time offer (see a balloon at reference numeral 55a).

<6> The route bus 51a also wants the user 53 to get on the route bus 51a at Bus stop BS01 and then get off the route bus 51a at Bus stop BS02.

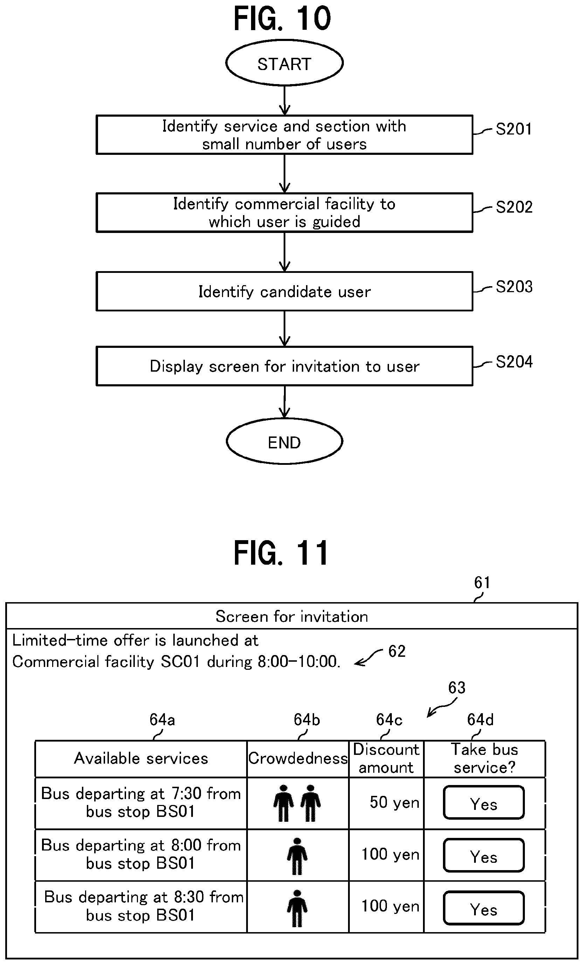

<7> The transportation guiding device 1 sends a screen for invitation 61 to the user terminal 2. The screen for invitation 61 makes an invitation to visit Commercial facility SC01. Detailed contents of the screen for invitation 61 is illustrated in FIG. 11, which also displays a period of time of the limited-time offer and which service of a route bus is available to go to Commercial facility SC01.

Case 2 of FIG. 3 shows the following.

<11> <1> to <4> in Case 2 are same as those in Case 1.

<12> The passenger estimate model 42 estimates that the route bus 51a has an insufficient number of unoccupied seats in the period of time of the limited-time offer (see a balloon at reference numeral 55b).

<13> It is thus desired that the user 53 gets on the route bus 51a at Bus stop BS01 and then gets off the route bus 51a at Bus stop BS02. It is not desired, however, that the route bus 51a be overloaded with users.

<14> Commercial facility SC01 is ready for arranging a microbus 54 to take the user 53 thereto, if the route bus 51a does not have enough seats so that the user 53 takes the route bus 51a.

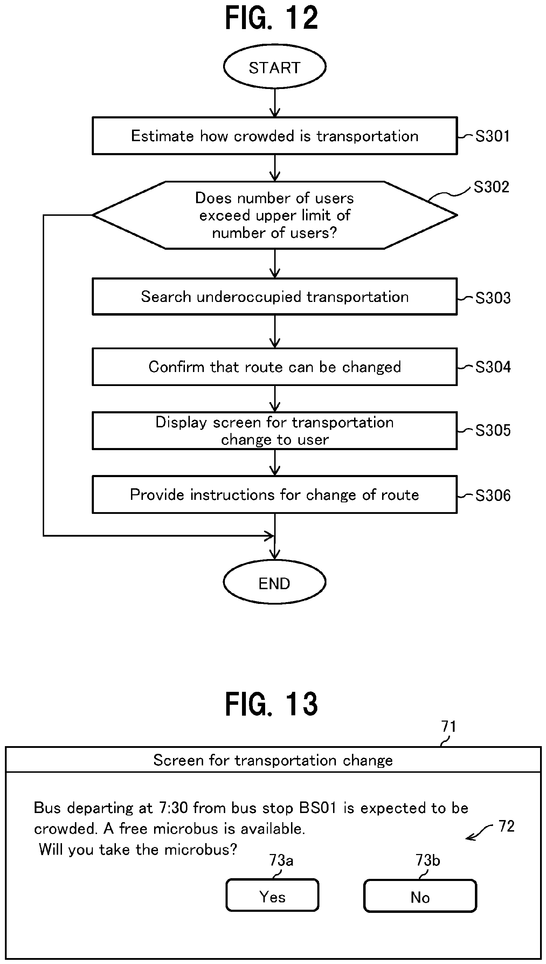

<15> The transportation guiding device 1 sends the user terminal 2 a screen for transportation change 71. The screen for transportation change 71 tempts the user 53 to get on not a route bus but a microbus 45. Detailed contents of the screen for transportation change 71: are illustrated in FIG. 13; and also display that the route bus 51a is likely to be crowded.

### (Visitor information)

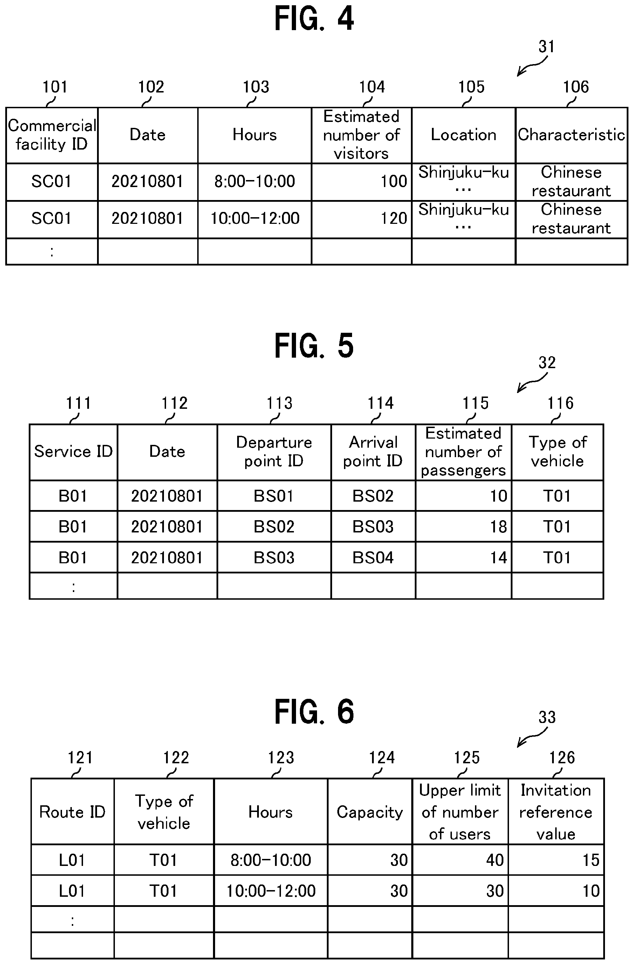

FIG. 4 is an example of the visitor information 31. The visitor information 31 contains Commercial facility ID (field 101), Date (field 102), Hours (field 103), Estimated number of visitors (field 104), Location (field 105), and Characteristic (field 106), which are stored in association with each other.

Commercial facility ID (field 101) is an identifier which uniquely identifies a commercial facility.

Date (field 102) is a date of interest in the future.

Hours (field 103) is hours of interest of the future date.

Estimated number of visitors (field 104) is the number of visitors (users) estimated to visit the commercial facility of interest during the period of time of interest.

Location (field 105) is a place at which the commercial facility is located.

Characteristic (field 106) is a property of the commercial facility, a property of a product or a service provided by the commercial facility, or a property of a main customer segment of the commercial facility.

In the example of FIG. 4, the visitor estimate model 41: allows an input of Commercial facility ID, Date, and Period of time; and thereby outputs an estimated number of visitors.

### (Passenger information)

FIG. 5 is an example of the passenger information 32. The passenger information 32 contains Service ID (field 111), Date (field 112), Departure point ID (field 113), Arrival point ID (field 114), Estimated number of passengers (field 115), and Type of vehicle (field 116), which are stored in association with each other.

Service ID (field 111) is an identifier which uniquely identifies a bus service. As described above, when a service ID is identified, a time when the bus service is provided is identified using the transportation service schedule 43.

Date (field 112) is a date of interest in the future.

Departure point ID (field 113) is an identifier which, when a route of a transportation service from a point of origin to a final destination thereof is divided into a plurality of sections by respective depots, uniquely identifies a depot as the departure point of each of the sections.

Arrival point ID (field 114) is an identifier which uniquely identifies a depot? as the arrival point of each of the sections.

Estimated number of passengers (field 115) is the number of passengers (users) estimated to be on board in a section from a departure point to an arrival point per service. In FIG. 5, for example, "18" in the second row shows that the service B01 runs from BS02 to BS03 with "18" passengers on board. This does not mean that 18 passengers get on board at BS02 and get off at BS03. When a passenger takes the service B01 through all the sections from BS01 to BS04, the passenger is redundantly counted and is included in each of "10" in the first row, "18" in the second row, and "14" in the third row.

Type of vehicle (field 116) is a name of a type of a vehicle used for a service of interest.

In the example of FIG. 5, the passenger estimate model 42: allows an input of a service ID, a date, a departure point ID, and an arrival point ID; and thereby outputs an estimated number of passengers.

### (Vehicle information)

FIG. 6 illustrates an example of the vehicle information 33. The vehicle information 33 contains Route ID (field 121), Type of vehicle (field 122), Hours (field 123), Capacity (field 124), Upper limit of number of users (field 125), and Invitation reference value (field 126), which are stored in association with each other.

Route ID (field 121) is an identifier which uniquely identifies a route.

Type of vehicle (field 122) is the same as Type of vehicle of FIG. 5.

Hours (field 123) is an hour during which a vehicle of interest runs.

Capacity (field 124) is the number of seats for passengers of the vehicle.

Upper limit of number of users (field 125) is an upper limit of the number of users within which the vehicle (service) can run safely. The upper limit is typically a riding capacity of the vehicle calculated by adding the number of passengers who are accepted to be standing on board the vehicle, to the number of seated passengers. A vehicle may accept standing passengers during one period of time (for example, morning and evening rush hours) and may not during the other period of time. The upper limit of the number of users may be calculated by subtracting an appropriate number from the number of seats, taking into account prevention of infection diseases from spreading.

Invitation reference value (field 126) is a threshold of the number of passengers, by which the transportation guiding device 1 determines that a mode of transportation of interest be replaced by an alternative mode of transportation. When Estimated number of passengers (field 115) of FIG. 5 takes a value equal to or smaller than an invitation reference value, the transportation guiding device 1 proactively increase the number of passengers of a vehicle of interest. When the estimated number of passengers is larger than the invitation reference value, the transportation guiding device 1 invites a new passenger to the alternative transportation. The invitation reference value may be equal to or smaller than a capacity and is herein designed not to exceed the upper limit.

### (User information)

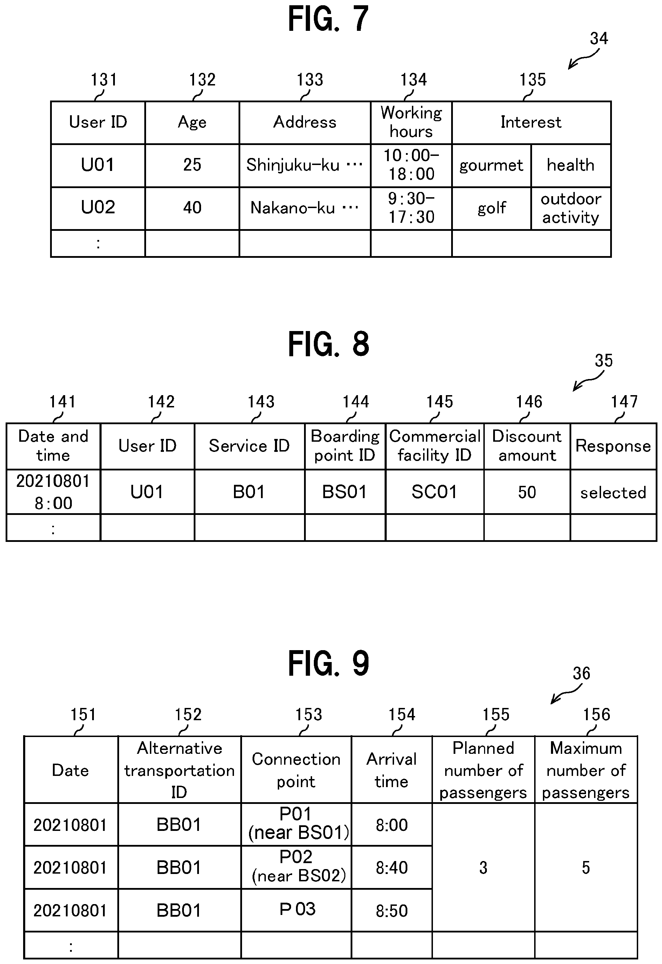

FIG. 7 illustrates an example of the user information 34. The user information 34 contains User ID (field 131), Age (field 132), Address (field 133), Working hours (field 134), and Interest (field 135), which are stored in association with each other.

User ID (field 131) is an identifier which uniquely identifies a user. As described above, the user: herein means a consumer (a passenger) to which the transportation guiding device 1 provides a service; and is registered in the transportation guiding device 1 before the service is provided.

Age (field 132) is an age of a user of interest.

Address (field 133) is an address of the user. When the user gives approval, in addition to or in place of the address, a current location (a latitude and a longitude) of the user may be stored. The user terminal 2 carried by a user herein: acquires a current location of its own, using GPS; and transmits the acquired current location to the transportation guiding device 1 on a real time basis.

Working hours (field 134) is a period of time during which the user is at work.

Interest (field 135) is an interest or a characteristic of consumption behavior of the user.

### (Invitation and response information)

FIG. 8 illustrates an example of the invitation and response information 35. The invitation and response information 35 contains Date and time (field 141), User ID (field 142), Service ID (field 143), Boarding point ID (field 144), Commercial facility ID (field 145), Discount amount (field 146), and Response (field 147), which are stored in association with each other.

Date and time (field 141) is a date and a time at which the transportation guiding device 1 transmits the screen for invitation 61 (FIG. 11) to the user terminal 2.

User ID (field 142) is the same as User ID in FIG. 7.

Service ID (field 143): is the same as Service ID in FIG. 5; and, herein, in particular, identifies a service which is displayed in the screen for invitation 61.

Boarding point ID (field 144) is an identifier which uniquely identifies a depot at which the user takes a service of interest.

Commercial facility ID (field 145) is the same as Commercial facility ID in FIG. 4; and, herein, in particular, identifies a commercial facility which is displayed in the screen for invitation 61.

Discount amount (field 146) is an economic benefit the user can obtain by responding to the screen for invitation 61 such as, for example, an amount of money of a coupon which the user can use at a commercial facility, and of a discount ticket, at a mode of transportation.

Response (field 147) is selected between "Selected" and "Not selected". "Selected" means that the user has selected one of a plurality of services displayed in the same screen for invitation 61. "Not selected" means that the user has not selected a service displayed therein.

### (Alternative transportation information)

FIG. 9 illustrates an example of the alternative transportation information 36. The alternative transportation information 36 contains Date (field 151), Alternative transportation ID (field 152), Connection point (field 153), Arrival time (field 154), Planned number of passengers (field 155), and Maximum number of passengers (field 156), which are stored in association with each other.

Date (field 151) is a date of interest in the future.

Alternative transportation ID (field 152) is an identifier which uniquely identifies a service of an alternative transportation. It is assumed herein that the alternative transportation is the microbus 54 arranged by a commercial facility of interest.

Connection point (field 153) is a depot of an alternative transportation. When a connection point of the alternative transportation is situated near a depot of the transportation of interest, an identifier which identifies the depot of the transportation of interest is also stored.

Arrival time (field 154) is a time when a service of the alternative transportation arrives at the connection point.

Planned number of passengers (field 155) is the number of passengers of the alternative transportation which is determined to be most desirable from a viewpoint of efficiency of transportation service and comfort of passengers.

Maximum number of passengers (field 156) is a capacity (the number of seats) of the service of the alternative transportation.

### (Procedure of processing)

A flowchart illustrating a procedure of a processing according to the embodiment is described below. There are two procedures of the processing, namely, a procedure of a processing of guiding a user a procedure of a processing of arranging an alternative transportation. When any of the procedures of the processing is started on condition that the following.
- The user guiding part 22 of the transportation guiding device 1 creates the visitor information 31 using the visitor estimate model 41 subjected to machine learning using data in the past. That is, the user guiding part 22 estimates the number of users of the commercial facility.
- The user guiding part 22 of the transportation guiding device 1 creates the passenger information 32 using the passenger estimate model 42 subjected to machine learning using data in the past. That is, the user guiding part 22 estimates the number of users of the service of the mode of transportation.
- The auxiliary storage 15 of the transportation guiding device 1 stores each of the visitor information 31 (FIG. 4), the passenger information 32(FIG. 5), and the vehicle information 33(FIG. 6), while keeping the each of the information up to date.
- The user registration part 21 of the transportation guiding device 1: allows an input of data from the user terminal 2; thereby create a record of the user information 34 (FIG. 7); and stored the created record in the auxiliary storage 15 in an up-to-date state.
- The usage analysis part 24 of the transportation guiding device 1: makes an access to the alternative transportation operator server 5; acquires the alternative transportation information 36 (FIG. 9) therefrom; and stores the acquired information in the auxiliary storage 15 in an up-to-date state.

### (Procedure of processing of guiding user)

FIG. 10 is a flowchart illustrating the procedure of the processing of guiding a user.

In step S201, the user guiding part 22 of the transportation guiding device 1 identifies a service and a section corresponding thereto each have a small number of users. More specifically, firstly, the user guiding part 22: searches the passenger information 32 (FIG. 5) and the vehicle information 33 (FIG. 6); and acquires therefrom a service ID and a section of a service which satisfies Conditions 1 and 2.

<Condition 1> In the passenger information 32, an estimated number of passengers of a service and a section corresponding thereto is equal to or smaller than a first threshold.

<Condition 2> In the vehicle information 33, an invitation reference value for a type of vehicle of the service and the section corresponding thereto each is larger than the estimated number of passengers.

For convenience of explanation, it is assumed herein that the first threshold is "10". The user guiding part 22 then acquires a service ID "B01" and a section "BS01 to BS02". Note that the transportation service schedule 43 previously defines that the service B01 runs during a period of time 8:00-10:00. A result of the search shows: that the service B01 in the section "BS01 to BS02" has an estimated number of passengers (ten (10) passengers) from the past data, which may not be a satisfactory number; and that, in addition to the estimated number of passengers, the service can take up to five (5) passengers (15-10=5).

Secondly, the user guiding part 22 temporarily stores therein the following:
- Service ID "B01";
- Period of time "8:00-10:00";
- Section "BS01 to BS02"; and
- Transportation service schedule of of Service "B01"

In step S202, the user guiding part 22 identifies a commercial facility to which a user is to be guided. More specifically, firstly, the user guiding part 22: searches the visitor information 31 (FIG. 4); and acquires therefrom a commercial facility ID for identifying a commercial facility that satisfies Conditions 3 to 5 as follows:
<Condition 3> Date and Period of time of the commercial facility of interest contains "8:00-10:00".
<Condition 4> An estimated number of passengers of the commercial facility is smaller than a prescribed second threshold.
<Condition5> A Location of the commercial facility is present near depot BS02.

For convenience of explanation, it is assumed herein that the second threshold is "100", then the user guiding part 22 acquires Commercial facility ID "SC01". A result of the search shows that Commercial facility SC01 may bring a passenger who gets on the service B01 at depot BS01 during the period of time "8:00-10:00" during which the past data shows that only a small number of customers is estimated to visit there.

Secondly, the user guiding part 22 acquires a name of an event scheduled to be held during the period of time "8:00-10:00" at Commercial facility SC01, from the commercial facility server 3. Note that it is not necessary for Commercial facility SC01 to always hold an event during a period of time during which only a small number of customers is estimated to visit there. For convenience of explanation, however, it is assumed herein that "limited-time offer" is acquired. Commercial facility SC01 is, for example, a Chinese restaurant in a large hotel, which wants to increase its sales during a period of time for a relatively late breakfast.

In step S203, the user guiding part 22 identifies a candidate user. More specifically, firstly, the user guiding part 22: searches the user information 34 (FIG. 7); and acquires a user ID for identifying a user who satisfies Conditions 6 to 9 as follows.

<Condition 6> An interest of a user is the same as or semantically similar to a characteristic of Commercial facility SC01 (field 106 of FIG. 4).

<Condition 7> The user can travel by the service B01 from his/her home or a current location to Commercial facility SC01 (field 105 of FIG. 4).

<Condition 8> "8:00-10:00" contains a period of time which is not working hours of the user.

<Condition 9> A total number of users does not exceed an acceptable number of users. The acceptable number of users herein is obtained by subtracting the estimated number of passengers (field 115 of FIG. 5) from an upper limit of users (field 125 of FIG. 6). The total number of user IDs acquired as a result of the research may exceed the acceptable number in some cases. In those cases, the user guiding part 22 narrows the number of users down to the acceptable number pursuant to a prescribed order of priority. The user guiding part 22 determines the prescribed order of priority based on, for example: a distance between a home or a current location of a user and a depot; a time overlapping between a period of time in the visitor information 31 and working hours in the user information 34; a semantic distance between a characteristic in the visitor information 31 and an interest in the user information 34.

The user guiding part 22 thus acquires a large number of user IDs including, for example, User ID "U01".

Secondly, the user guiding part 22: creates a new record of the invitation and response information 35 as much as the number of user IDs acquired in the "first" substep of S203; and fill a field 142 to a field 146 with appropriate data, while leaving a field 141 and a field 147 blank. As a Boarding point ID, the user guiding part 22 stores therein an identifier for identifying the nearest depot from an address or a current location of the user. As a discount amount, the user guiding part 22 stores therein an amount acquired from Commercial facility SC01.

In step S204, the user guiding part 22 displays the screen for invitation 61 (FIG. 11) to the user. More specifically, firstly, the user guiding part 22 displays the screen for invitation 61 in the user terminal 2 of each of users identified by all of user IDs acquired by narrowing down in the "first" substep of step S203. Though explanation of FIG. 10 is still to be continued, FIG. 11 is described next.

FIG. 11 illustrates an example of the screen for invitation 61. The screen for invitation 61 of FIG. 11 is received by a user U01 who is currently present near the depot BS01. The user guiding part 22 displays a commercial facility ID "SC01", and a name and a period of time of an event scheduled to be held in a commercial facility of interest, in a field 62. In addition to the commercial facility ID, the user guiding part 22 may display a name of the corresponding commercial facility (for example, "View Restaurant, Hotel XX").

The user guiding part 22 displays a transportation list 63. The user guiding part 22: references the transportation service schedule 43; and acquires therefrom a service ID of a service which arrives at depot BS02 near Commercial facility SC01 during a period of time "8:00-10:00", and a time at which the service departs from depot BS01. The service of which service ID is acquired is referred to as a "service to be invited". A plurality of pairs of a service to be invited and a departure time corresponding thereto are usually acquired.

The user guiding part 22 acquires an estimated number of passengers (field 115 of FIG. 5) for each of the services to be invited. The user guiding part 22 acquires a discount amount (field 146 of FIG. 8). In order to prevent too much crowdedness, it is designed such that the larger the estimated number of passengers (a degree of crowdedness) of service to be invited, the smaller the discount amount. The user guiding part 22 displays a depot and a departure time at which a service to be invited departs, in a field 64a; an icon representing the crowdedness, in a field 64b; a discount amount, in a field 64c; and a button indicating whether or not the user will "Take bus service", in a field 64d.

The transportation list 63 is composed of a plurality of records (rows). The upper the record is displayed, the earlier the departure time. The user U01 desires to take a service which departs at 7:30 from the depot BS01. The user U01 thus presses down a "Yes" button in the first row of the transportation list 63. Explanation is made by referring back to FIG. 10.

In step S204, secondly, the user guiding part 22: stores a current date and time in the date and time field 141 of a record corresponding to the user U01 in the invitation and response information 35 (FIG. 8); and also stores "Selected" in Response 147. The user guiding part 22 also stores the current date and time in each of the date and time field 141 of the other records of the user U01; and stores "Not selected" in each of the response field 147. The user guiding part 22 then terminates the procedure of the processing of guiding a user.

As clearly understood by the described above, the user guiding part 22 provides information on a service and a commercial facility such that the number of users of the service of transportation is increased within a prescribed range (within a range not exceeding an upper limit of the number of users).

### (Procedure of processing of arranging alternative transportation)

FIG. 12 is a flowchart of the procedure of a processing of arranging an alternative transportation. When the procedure of the processing of arranging an alternative transportation is started, in addition to the aforementioned assumptions, the following is assumed to be satisfied.
- The usage analysis part 24 of the transportation guiding device 1: has constant access to the commercial facility server 3; thereby acquires updated POS information (not illustrated); and stores the acquired information in the auxiliary storage 15.
- The usage analysis part 24: has constant access to the transportation operator server 4; thereby acquires updated information on, for example, IC card history, crowdedness at depot, and crowdedness in vehicle (not illustrated); and stores the acquired information in the auxiliary storage 15. That is, the usage analysis part 24 detects how crowded is each service on a real-time basis, separately from the passenger information 32 created by the passenger estimate model 42.

It is assumed herein that: the procedure of a processing of guiding a user illustrated in FIG. 10 has just terminated; and the user U01 is waiting for the bus service B01 at the depot BS01. It is also assumed herein that: the usage analysis part 24: accesses the commercial facility server 3 as described above; and confirms that Commercial facility SC01 is likely to have the number of visitors as expected.

In step S301, the alternative transportation arranging part 23 of the transportation guiding device 1 estimates how crowded is a transportation of interest. More specifically, the alternative transportation arranging part 23 acquires the number of current users of Service B01 (for example, the number of passengers ten minutes before arriving at depot BS01). The terms "the number of current users" herein is a result of the detection by the usage analysis part 24 on the real-time basis.

In step S302, the alternative transportation arranging part 23 determines whether or not the number of users exceeds an upper limit of the number of users. More specifically, firstly, the alternative transportation arranging part 23 determines whether or not the number of users acquired in step S301 exceeds an upper limit of the number of users of the vehicle information 33 (field 125 of FIG. 6).

Secondly, when the number of users exceeds an upper limit of the number of users (step S302 "YES"), the alternative transportation arranging part 23 advances the processing to step S303. In the other cases (step S302 "NO"), the alternative transportation arranging part 23 terminates the procedure of the processing of arranging an alternative transportation.

In step S303, the usage analysis part 24 of the transportation guiding device 1 searches for an underoccupied mode of transportation. More specifically, the usage analysis part 24 searches a service of an alternative transportation which satisfies Conditions 11 to 13 as follows.

<Condition 11> A connection point (field 153 of FIG. 9) of a candidate service is situated near the depot BS01 and the depot BS02.

<Condition 12> The number of current users of the candidate service is smaller than the maximum number of passengers thereof (field 156 of FIG. 9).

<Condition 13> The candidate service is currently running toward the depot BS01.

For convenience of explanation, it is assumed herein that a service BB01 of the alternative transportation is applicable.

In step S304, the alternative transportation arranging part 23 of the transportation guiding device 1 confirms that a route can be changed. More specifically, the alternative transportation arranging part 23 displays a message of requesting for the route change, "You are requested to take a customer from the depot BS01 to the depot BS02", in an in-vehicle terminal (not illustrated) of the service BB01. The in-vehicle terminal of the service BB01 sends an acknowledge to the transportation guiding device 1 that the service BB01 will make a stop at the depot BS01, in place of a connection point P01, and then make a stop at the depot BS02, in place of a connection point P02.

In step S305, the alternative transportation arranging part 23 displays the screen for transportation change 71 (FIG. 13) to the user. More specifically, the alternative transportation arranging part 23 displays the screen for transportation change 71 in the user terminal 2 of the user U01. Though explanation of the flowchart is still to be continued, FIG. 13 is described next.

FIG. 13 is an example of the screen for transportation change 71. The alternative transportation arranging part 23 invites the user U01 to take the service BB01 of the alternative transportation, in place of the service B01, because the service B01 which has been previously informed of being available is expected to be crowded (reference numeral 72). The user U01 presses down either "Yes" button 73a or "No" button 73b as the user U01 wishes. It is assumed herein that the user U01 presses down the "Yes" button 73a. Explanation is returned to FIG. 12.

In step S306, the alternative transportation arranging part 23 instructs the service BB01 to change the route. More specifically, the alternative transportation arranging part 23 displays a message of instructing a route change, "The customer wants to take the service BB01. You are requested to make a stop at the depot BS01", to the in-vehicle terminal of the service BB01. The alternative transportation arranging part 23 then terminates the procedure of the processing of arranging an alternative transportation.

### (Advantageous effects of the embodiment)

Advantageous effects of the transportation guiding device 1 according to the embodiment are as follows.
(1) The transportation guiding device 1 can increase the number of users of a mode of transportation and a commercial facility, while preventing the mode of transportation from being crowded.
(2) When a mode of transportation of interest is expected to be crowded, the transportation guiding device 1 can guide a user thereof in making connections to another mode of transportation.
(3) The transportation guiding device 1 can use a passenger estimate model which can be subjected to machine learning.
(4) The transportation guiding device 1 can use a visitor estimate model which can be subjected to machine learning.
(5) The transportation guiding device 1 can display a plurality of candidate modes of transportation, as well as crowdedness of each of the candidate modes of transportation and an economic value given to a user.
(6) The transportation guiding device 1 can average crowdedness of a plurality of transportation services, by changing amounts of economic values given to users.
(7) The transportation guiding device 1 can increase the number of users of a mode of transportation to such an extent that safety can be secured.

The present invention is carried out not only by the above-described embodiment but also by variations of many types. For example, the above-described embodiment is intended to be illustrative of the present invention in an easily understandable manner and the present invention is not limited to the one including all of the components explained in the embodiment. Part of a configuration of an example of the present invention may be substituted by or added to that of another example. Part of a configuration of an example may be deleted.

### DESCRIPTION OF REFERENCE NUMERALS

- 1: transportation guiding device
- 2: user terminal
- 3: commercial facility server
- 4: transportation operator server
- 5: alternative transportation operator server
- 6: network
- 11: central control unit
- 12: input device
- 13: output device
- 14: main storage
- 15: auxiliary storage
- 16: communication device
- 21: user registration part
- 22: user guiding part
- 23: alternative transportation arranging part
- 24: usage analysis part
- 31: visitor information
- 32: passenger information
- 33: vehicle information
- 34: user information
- 35: invitation and response information
- 36: alternative transportation information
- 41: visitor estimate model
- 42: passenger estimate model
- 43: transportation service schedule
- 61: screen for invitation
- 71: screen for transportation change

## Claims

1. A transportation guiding device, comprising a user guiding part configured to:
identify a service of a mode of transportation currently having a small number of users; and
display, to a user, the identified service of the mode of transportation and a commercial facility to which the service of the mode of transportation takes, such that the number of users of the service of the mode of transportation is increased within a prescribed range.

2. The transportation guiding device according to claim 1, further comprising:
a usage analysis part configured to detect the number of users of the service of the mode of transportation on a real time basis; and
an alternative transportation arranging part configured to, when the number of the users of the service of the mode of transportation detected on the real time basis exceeds the prescribed range, display a service of a mode of transportation other than the displayed service of the mode of transportation, to the user.

3. The transportation guiding device according to claim 2,
wherein the user guiding part is configured to estimate the number of the users of the service of the mode of transportation using a passenger estimate model subjected to machine learning using data in the past.

4. The transportation guiding device according to claim 3,
wherein the user guiding part is configured to:
estimate the number of users of a commercial facility using a visitor estimate model subjected to machine learning using data in the past; and
identify a commercial facility currently having a small number of users, as the commercial facility to which the service of the mode of transportation takes.

5. The transportation guiding device according to claim 4,
wherein the user guiding part is configured to display, to the user, a plurality of candidate modes of transportation, as well as crowdedness of each of the candidate modes of transportation, and an economic value given to the user by the commercial facility.

6. The transportation guiding device according to claim 5,
wherein the larger the crowdedness, the smaller the economic value.

7. The transportation guiding device according to claim 6,
wherein an upper limit of the prescribed range is an upper limit of the number of users within which the service of the mode of transportation can run safely.

8. A transportation guiding method of a transportation guiding device performed by a user guiding part of the transportation guiding device, the transportation guiding method comprising the steps of:
identifying a service of a mode of transportation currently having a small number of users; and
displaying, to a user, the identified service of the mode of transportation and a commercial facility to which the service of the mode of transportation takes, such that the number of users of the service of the mode of transportation is increased within a prescribed range.

9. A transportation guiding program causing a computer to serve as a user guiding part of a transportation guiding device, the user guiding part being configured to:
identify a service of a mode of transportation currently having a small number of users; and
display, to a user, the identified service of the mode of transportation and a commercial facility to which the service of the mode of transportation takes, such that the number of users of the service of the mode of transportation is increased within a prescribed range.
